# FASCICULE DE BREVET EUROPEEN

(11) **EP 0 630 768 B1**
(45) Date de publication et mention de la délivrance du brevet: **16.09.1998**
(21) Numéro de dépôt: 94109068.0
(22) Date de dépôt: 14.06.1994
(51) Int. Cl.: B60C 23/02, B60C 23/04

(54) **Dispositif de surveillance et de contrôle à froid de la pression de gonflage de pneumatiques de véhicules routiers**
Vorrichtung zur Überwachung und Kontrolle des Reifendrucks der Reifen von Strassenfahrzeugen im kalten Zustand
Tyre pressure monitoring device in cold state for motor vehicles

(30) Priorité: 25.06.1993 FR 9307882
(43) Date de publication de la demande: 28.12.1994
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Chamussy, Jean-François, F-41000 Blois (FR); Francois, Jean-Pierre, F-63540 Romagnat (FR)
(74) Mandataire: Bauvir, Jacques

(56) Documents cités:
- EP-A- 0 284 895
- WO-A-92/14620
- DE-C- 3 841 509
- US-A- 5 083 457

## Description

L'invention concerne un dispositif de surveillance ainsi que de contrôle de la pression de gonflage à l'arrêt des pneumatiques (14) d'un véhicule comme connu de EP-A-0 284 895.

Le terme de "véhicule" est ici entendu comme identifiant une unité roulante autonome, véhicule de tourisme, tracteur ou remorque poids lourd, motocyclette...

La surveillance de la pression de gonflage "à froid" des pneumatiques est une opération qui doit être effectuée régulièrement pour une bonne utilisation de ceux-ci.

Cette opération consiste à mesurer "à froid", c'est-à-dire au moins après plusieurs heures d'arrêt, la pression des pneumatiques et à vérifier que cette pression est conforme aux indications du fabricant de pneumatiques compte tenu, notamment en poids lourds, de leurs conditions d'utilisation.

Cette opération simple peut se révéler fastidieuse lorsqu'elle concerne des flottes de véhicules poids lourds de plusieurs dizaines ou centaines de véhicules, tracteurs et remorques.

Les dispositifs de surveillance de la pression des pneumatiques sont en plein développement et il apparait souhaitable de pouvoir les utiliser dans ce but de vérification régulière.

Un type de dispositif de surveillance de pneumatiques, le Michelin Tyre Monitor ou M.T.M. de Michelin, est un dispositif centralisé qui comporte un capteur par pneumatique, des moyens de liaison électrique entre ces capteurs et un calculateur central qui alimente en énergie les capteurs et analyse les informations que ces capteurs transmettent. Le calculateur est lui-même relié à un afficheur placé dans la cabine du véhicule. Ce dispositif mesure en continu, dès sa mise sous tension, à l'arrêt comme en roulage, les pressions de gonflage des différents pneumatiques.

Un tel dispositif peut tout à fait permettre la vérification à froid des pneumatiques du véhicule qu'il équipe. Cependant, cette vérification nécessite d'entrer dans la cabine du véhicule et de mettre le contact pour alimenter en énergie le dispositif de surveillance des pneumatiques.

L'invention a donc pour objet un dispositif de surveillance de pression de pneumatiques qui permette de réaliser dans d'excellentes conditions cette vérification régulière à froid sans qu'il soit nécessaire de rentrer dans la cabine du tracteur et de mettre le contact, ni d'atteler les remorques.

Le dispositif de surveillance ainsi que de contrôle de la pression de gonflage à froid des pneumatiques d'un véhicule selon l'invention comprend les caractéristiques de la revendication 1.

Les moyens autonomes d'alimentation de l'unité centrale et de dialogue avec elle comportent un boîtier portatif de contrôle, équipé de moyens d'alimentation électrique autonomes, connectable à une prise placée sur le véhicule et reliée à ladite unité centrale.

Enfin, les fourchettes de valeurs recommandées de pression de gonflage à froid de chaque pneumatique du véhicule mémorisées dans l'unité centrale peuvent être modifiées avec le boitier portatif de contrôle.

Un mode de réalisation du dispositif selon l'invention va maintenant être décrit avec l'aide des figures suivantes :
- la fig. 1 est une vue en coupe partielle d'un ensemble de deux roues jumelées, de leur moyeu et du tambour de frein, coupe passant par l'axe des roues et l'axe d'un goujon de montage modifié ;
- la fig. 2 est un schéma d'installation appliqué à un tracteur poids lourd.

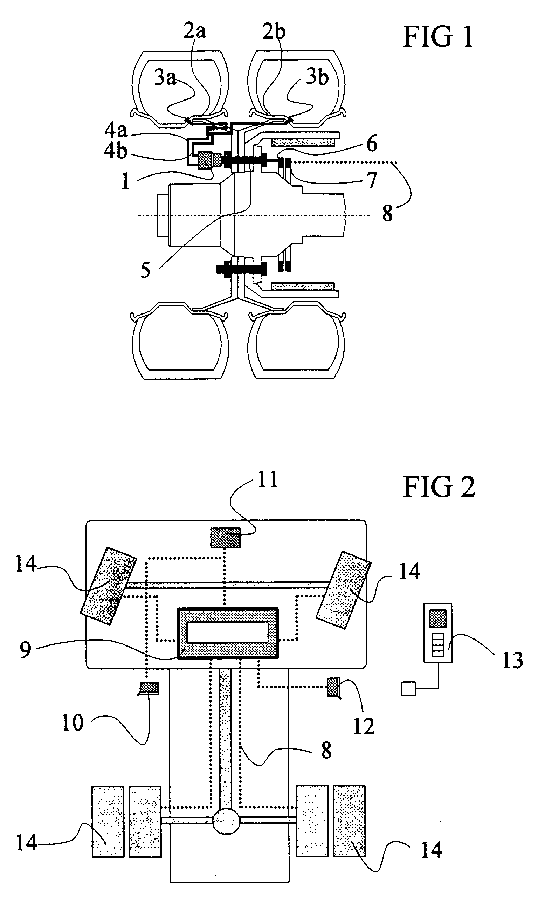

La figure 1 illustre l'installation du dispositif de surveillance des pressions de gonflage de pneumatiques pour véhicule routier sur une roue d'essieu arrière d'un tracteur poids lourd.

Un capteur de pression 1 est fixé à l'extrémité de l'un des goujons 5 de fixation des roues jumelées 2a et 2b, ce capteur 1 ayant deux voies de mesure puisqu'il équipe un ensemble de deux roues jumelées. Le capteur 1 est relié aux valves 3a et 3b par l'intermédiaire des liaisons pneumatiques 4a et 4b. Ledit capteur 1 est aussi relié à une unité centrale 9 (fig. 2) par des moyens de liaisons électriques qui comportent :
- des conducteurs électriques traversant le goujon 5 jusqu'à une antenne mobile 6,
- un élément de couplage inductif composé de ladite antenne mobile 6 et d'une antenne fixe 7,
- une liaison électrique entre ladite antenne fixe 7 et l'unité centrale 9 utilisant le faisceau électrique 8 du véhicule.

La figure 2 présente un schéma général d'installation du dispositif de surveillance sur un tracteur poids lourd. Chaque roue du tracteur est équipée comme on vient de le décrire, le dispositif comporte en plus :
- une unité centrale 9 ; dans le cas des remorques, cette unité centrale est alimentée en énergie par le véhicule tracteur par l'intermédiaire de la prise normalisée 10 reliant le faisceau électrique de la remorque à celui du tracteur ;
- un moyen d'alarme 11 du conducteur relié à ladite unité centrale 9 ;
- une prise 12 placée sur le côté du véhicule et reliée à l'unité centrale 9 destinée à permettre un diagnostic du bon fonctionnement de l'unité centrale 9 au moyen d'une valise diagnostic ainsi qu'à contrôler la pression de gonflage à froid des pneumatiques au moyen d'un boitier portatif de contrôle 13.

Le boitier portatif de contrôle 13 se connecte sur la prise 12. C'est un outil informatique qui comporte des moyens d'alimentation électrique de l'unité centrale 9, et qui peut dialoguer avec ladite unité centrale.

Le boîtier portatif de contrôle 13 peut ainsi interroger ladite unité centrale 9 pour déterminer si les pressions de gonflage à froid de tous les pneumatiques 14 du véhicule sont conformes aux consignes d'utilisation du fabricant ou non. En cas de non conformité, ledit boîtier portatif de contrôle 13 peut identifier le ou les pneumatiques 14 concernés. D'autre part, le boîtier portatif de contrôle 13 peut aussi modifier les fourchettes des valeurs de pression de gonflage à froid recommandées mémorisées dans l'unité centrale, en fonction des conditions d'utilisation particulières des pneumatiques.

En conséquence, l'utilisation de ce système de surveillance des pneumatiques apporte un gain remarquable de rapidité et de fiabilité pour assurer cette opération de contrôle des pressions de gonflage à froid des pneumatiques.

## Revendications

1. Dispositif de surveillance ainsi que de contrôle de la pression de gonflage à l'arrêt des pneumatiques (14) d'un véhicule comportant :
- des moyens (1) de mesure de la pression de gonflage de chaque pneumatique (14) ;
- une unité centrale (9) pouvant analyser lesdites mesures en référence à des fourchettes de valeurs mémorisées et ainsi détecter des valeurs anormales ;
- des moyens (5, 6, 7, 8) de transmission desdites mesures à ladite unité centrale (9) ;
- des moyens de transmission d'une alarme au conducteur du véhicule ;
- des moyens autonomes (12, 13) pour visualiser la pression de gonflage de chacun des pneumatiques à partir de l'extérieur du véhicule ;
caractérisé en ce que les moyens autonomes (12, 13) comprennent des moyens pour alimenter en énergie ladite unité centrale (9) et dialoguer avec elle.

2. Dispositif de surveillance ainsi que de contrôle de la pression de gonflage à froid des pneumatiques (14) d'un véhicule selon la revendication 1, dans lequel les moyens autonomes (12, 13) comportent un boîtier portatif de contrôle (13), équipé de moyens d'alimentation électrique autonomes, connectable à une prise (12) placée sur le véhicule et reliée à ladite unité centrale (9).

3. Dispositif de surveillance ainsi que de contrôle de la pression de gonflage à froid des pneumatiques (14) d'un véhicule selon les revendications 1 et 2 caractérisé en ce que les fourchettes de valeurs recommandées de pression de gonflage à froid de chaque pneumatique (14) du véhicule mémorisées dans l'unité centrale (9) peuvent être modifiées avec le boîtier portatif de contrôle (13).

## Claims

1. A device for monitoring and checking the inflation pressure when the tyres (14) of a vehicle are stopped, comprising:
- means (1) for measuring the inflation pressure of each tyre (14);
- a central processing unit (9) capable of analysing said measurements with reference to ranges of stored values and thus detecting abnormal values;
- means (5, 6, 7, 8) for transmitting said measurements to said central processing unit (9);
- means for transmitting an alarm to the driver of the vehicle;
- autonomous means (12, 13) for displaying the inflation pressure of each of the tyres from outside the vehicle;
characterised in that the autonomous means (12, 13) comprise means for supplying said central processing unit (9) with power and for communicating therewith.

2. A device for monitoring and checking the cold inflation pressure of tyres (14) of a vehicle according to claim 1, wherein the autonomous means (12, 13) comprise a portable checking box (13), equipped with autonomous electric supply means, that can be connected to a socket (12) placed on the vehicle and connected to said central processing unit (9).

3. A device for monitoring and checking the cold inflation pressure (14) of the tyres of a vehicle according to claims 1 and 2, characterised in that the ranges of recommended cold inflation pressure values of each tyre (14) of the vehicle which are stored in the central processing unit (9) can be modified by the portable checking box (13).

## Patentansprüche

1. Vorrichtung zur Überwachung und zur Kontrolle des Reifendrucks der stillstehenden Reifen (14) eines Fahrzeugs, die aufweist:
- Mittel (1) zur Messung des Reifendrucks jedes Reifens (14);
- eine Zentraleinheit (9), die diese Messungen unter Bezug auf gespeicherte Meßwertbereiche analysieren und somit anomale Werte erfassen kann;
- Mittel (5, 6, 7, 8) zur Übertragung dieser Meßwerte an die Zentraleinheit (9);
- Mittel zur Übertragung eines Alarms zum Fahrer des Fahrzeugs;
- autonome Mittel (12, 13), um den Reifendruck jedes der Reifen von außerhalb des Fahrzeugs anzuzeigen;
dadurch gekennzeichnet, daß die autonomen Mittel (12, 13) Mittel enthalten, um die Zentraleinheit (9) mit Strom zu versorgen und mit ihr in Dialog-Verbindung zu treten.

2. Vorrichtung zur Überwachung und zur Kontrolle des Reifendrucks im kalten Zustand der Reifen (14) eines Fahrzeugs nach Anspruch 1, bei der die autonomen Mittel (12, 13) ein tragbares Steuergehäuse (13) aufweisen, das mit autonomen Mitteln zur Stromversorgung versehen und an eine Steckverbindung (12) anschließbar ist, die sich auf dem Fahrzeug befindet und die mit der Zentraleinheit (9) verbunden ist.

3. Vorrichtung zur Überwachung und zur Kontrolle des Reifendrucks im kalten Zustand der Reifen (14) eines Fahrzeugs nach den Ansprüchen 1 und 2, dadurch gekennzeichnet, daß die empfohlenen Wertbereiche des Reifendrucks im kalten Zustand jedes Reifens (14) des Fahrzeugs, die in der Zentraleinheit (9) gespeichert sind, mithilfe des tragbaren Steuergehäuses (13) verändert werden können.
